# EUROPÄISCHE PATENTANMELDUNG

(11) **EP 4 796 433 A1**
(43) Veröffentlichungstag der Anmeldung: **26.08.2026**
(21) Anmeldenummer: 25217064.2
(22) Anmeldetag: 19.11.2025
(51) Int. Cl.: B64C 3/18, B64D 7/02, B64D 7/04, B64U 10/25

(54) **FLÜGEL EINES LUFTFAHRZEUGES UND LUFTFAHRZEUG MIT EINEM SOLCHEN FLÜGEL**

(30) Priorität: 21.02.2025 DE 102025000653
(71) Anmelder: MBDA Deutschland GmbH, 86529 Schrobenhausen (DE)
(72) Erfinder: KRENIK, Alexander, 86633 Neuburg a.d. Donau (DE)
(74) Vertreter: Isarpatent

(57) **Zusammenfassung**

Die vorliegende Erfindung betrifft einen Flügel (2, 2a, b, c) eines Luftfahrzeuges (1), insbesondere unbemannten Luftfahrzeuges (1), mit einem sich in Richtung einer Flügellängsachse ersteckenden Flügelholm (5) und wenigstens einer in den Flügel (2, 2a, b, c) integrierten und einen Lauf (6) aufweisenden Schussvorrichtung (7), wobei der Lauf (6) in einer Längsrichtung des Flügelholms (5) ausgerichtet ist und eine im Bereich einer Flügelspitze (8) angeordnete Austrittsöffnung (9) aufweist, ein Luftfahrzeug (1), insbesondere unbemanntes Luftfahrzeug (1), mit wenigstens einem solchen Flügel (2, 2a, b, c) sowie die Verwendung einer Schussvorrichtung in einem solchen Flügel (2, 2a, b, c).

## Beschreibung

### TECHNISCHES GEBIET DER ERFINDUNG

Die vorliegende Erfindung betrifft einen Flügel eines Luftfahrzeuges und ein Luftfahrzeug mit einem solchen Flügel.

### HINTERGRUND DER ERFINDUNG

Unbemannte Luftfahrzeuge (unmanned aerial vehicles - UAV), werden als wiederverwendbare Einzeldrohnen oder in einem koordinierten Verbund als Drohnenschwarm zur Bekämpfung oder zum Abfangen gegnerischer Luftfahrzeuge, insbesondere gegnerischer Drohnen, eingesetzt. Die Einzeldrohne wird dabei mit wenigstens einer Schusswaffe ausgerüstet, die bei der Bekämpfung oder dem Abfangen der gegnerischen Drohnen zum Einsatz gebracht wird. Durch die Integration einer Schusswaffe in Flugrichtung, können jedoch Situationen auftreten, in denen im Falle einer begrenzten Schussweite, z.B. bei der Verwendung von Schrotmunition oder Granaten, die Einzeldrohne zu nah an die zu bekämpfende oder abzufangende Drohne heranfliegen muss, sodass es bei sich kreuzenden Geschwindigkeitsvektoren zu einer Kollision der jeweiligen Fluggeräte kommen kann.

### ZUSAMMENFASSUNG DER ERFINDUNG

Dementsprechend ist es eine Aufgabe der vorliegenden Erfindung, eine Möglichkeit zur verbesserten Bekämpfung von gegnerischen Drohnen oder Luftfahrzeugen bei Vermeidung von Kollisionen der Luftfahrzeuge bereitzustellen.

Die vorliegende Aufgabe wird gelöst durch einen Flügel eines Luftfahrzeuges mit den Merkmalen des Anspruchs 1, ein Luftfahrzeug mit einem solchen Flügel mit den Merkmalen des Patentanspruchs 11 sowie durch eine Verwendung einer Schussvorrichtung in einem Flügel eines Luftfahrzeuges mit den Merkmalen des Patentanspruchs 14.

Nach einem ersten Aspekt der vorliegenden Erfindung ist ein Flügel eines Luftfahrzeuges, insbesondere eines unbemannten Luftfahrzeuges, mit einem sich in Richtung einer Flügellängsachse ersteckenden Flügelholm und wenigstens einer in den Flügel integrierten und einen Lauf aufweisenden Schussvorrichtung vorgesehen, wobei der Lauf in einer Längsrichtung des Flügelholms ausgerichtet ist und eine im Bereich einer Flügelspitze angeordnete Austrittsöffnung aufweist.

Nach einem weiteren Aspekt der vorliegenden Erfindung ist ein Luftfahrzeug, insbesondere unbemanntes Luftfahrzeug, mit wenigstens einem erfindungsgemäßen Flügel vorgesehen, wobei eine Schussrichtung der Schussvorrichtung orthogonal zu einer Längsachse des Luftfahrzeuges ausgerichtet ist.

Nach einem weiteren Aspekt der vorliegenden Erfindung ist eine Verwendung einer Schussvorrichtung in einem Flügel eines Luftfahrzeuges, insbesondere in einem erfindungsgemäßen Flügel, vorgesehen.

Es ist eine Idee der vorliegenden Erfindung, eine effektive Bekämpfung gegnerischer Luftfahrzeuge, insbesondere bewaffneter oder unbewaffneter Drohnen, bei Vermeidung von Kollisionen zwischen dem bekämpfenden und dem bekämpften Luftfahrzeug, vornehmen zu können. Wird hierzu der Lauf einer Schussvorrichtung quer zur Flugrichtung in einem Flügel des bekämpfenden Luftfahrzeuges angeordnet, tritt ein Projektil während des Vorbeifluges am bekämpften Luftfahrzeug seitlich am bekämpfenden Luftfahrzeug aus. Vorteilhaft wird so ein Kollisionskurs der Luftfahrzeuge bei dennoch effektiver Bekämpfung vermieden. Dies erlaubt auch die Verwendung von Schusswaffen mit geringerer Reichweite, wie beispielsweise Schrotmunition oder Granaten verwendenden Schusswaffen, die im Flügel integriert sind. Da der Schuss abgegeben werden kann, während das bekämpfende Luftfahrzeug ohne Kollisionsrisiko sehr nahe am gegnerischen Luftfahrzeug vorbeifliegt, wird die Treffergenauigkeit und die Effizienz der Bekämpfungsmaßnahme bei reduziertem Munitionsbedarf vorteilhaft erhöht. Missionsziele können so mit insgesamt geringerem Munitionseinsatz erreicht werden.

Gemäß einer Ausführungsform des Flügels ist der Lauf im Flügelholm oder einem Flügelholmabschnitt aufgenommen oder bildet den Flügelholm oder den Flügelholmabschnitt aus. Vorteilhaft ergibt sich aus der Integration des Laufes im Flügelholm oder einem Flügelholmabschnitt bzw. in der alternativen Ausführung, wobei der Lauf selbst als tragendes Strukturelement vorgesehen ist, eine effiziente Kombination aus aerodynamischer und struktureller Funktionalität sowie Bewaffnung. Durch die jeweilige Integration bleibt dabei vor allem die aerodynamische Integrität des Flügels erhalten, während gleichzeitig eine kompakte und platzsparende Lösung zur Anordnung der Schussvorrichtung geschaffen wird.

Gemäß einer Ausführungsform ist die Schussvorrichtung als Schusswaffe zur Abgabe von Granat-, Kugel- oder Schrotgeschoßen ausgebildet. Die Verwendung von Schrotmunition erlaubt vorteilhaft eine breitere Streuung der Geschosse, wodurch die Wahrscheinlichkeit eines Treffers, insbesondere bei sich schnell bewegenden oder kleinen Zielen, wie Drohnen, signifikant erhöht wird. Dies ist insbesondere auch von Vorteil für den Einsatz gegen Drohnenschwärme. Schrotgeschosse sind dabei besonders für den Einsatz auf kurzen bis mittleren Distanzen geeignet, sodass das Luftfahrzeug nicht zwingend mit großkalibriger Munition oder komplexen Zielverfolgungssystemen ausgerüstet sein muss. Durch die Ausrichtung der Schussrichtung quer zur Flugrichtung kann die Schrotladung im Vorbeiflug seitlich aus dem Flügel austreten, ohne dass das Luftfahrzeug auf direktem Kollisionskurs mit dem gegnerischen Ziel fliegen muss. Vorteilhaft wird dadurch eine effektive Bekämpfung bei hoher Annäherungsgeschwindigkeit und reduziertem Kollisionsrisiko ermöglicht. Die Integration der Schussvorrichtung in den Flügelholm oder einen Abschnitt desselben oder bei Ausbildung des Laufs als Flügelholm oder Flügelholmabschnitt sind zudem keine zusätzlichen externen Waffenaufhängungen erforderlich, wodurch vorteilhaft die aerodynamische Effizienz und strukturelle Stabilität des Luftfahrzeugs aufrechterhalten werden kann.

Die alternative Ausführungsform, bei der die Schussvorrichtung zur Abgabe von Kugelgeschossen ausgebildet ist, erlaubt im Gegensatz zu Schrotgeschossen, die eine breite Streuung erzeugen, vorteilhaft eine präzisere Bekämpfung einzelner Ziele auf größeren Distanzen und reduziert das Risiko von Streuschäden. Aufgrund der regelmäßig höheren Massendichten und günstigeren aerodynamischen Stabilität weisen Kugelgeschosse oder Granaten eine größere kinetische Energie auf und zeigen eine erhöhte Durchschlagskraft. Dies ist besonders vorteilhaft bei der Bekämpfung gepanzerter oder verstärkter Ziele, beispielsweise von Drohnen mit Schutzstrukturen oder gegnerischen Luftfahrzeugen mit robuster Außenhülle.

Durch die geringere Luftwiderstandsempfindlichkeit im Vergleich zu Schrotgeschossen bleibt die Flugbahn von Kugelgeschossen zudem stabiler, sodass vorteilhaft eine höhere Zielgenauigkeit auf mittlere und größere Entfernungen erreicht wird. Die Möglichkeit, sowohl Kugel- als auch Schrotgeschosse im erfindungsgemäßen Flügel zu verwenden, ermöglicht vorteilhaft flexible Einsatzoptionen, wobei Schrotmunition vor allem für den Nahbereich, insbesondere gegen Drohnenschwärme oder agile Ziele und Kugelgeschosse für die gezielte Bekämpfung einzelner Ziele auf mittleren bis großen Distanzen eingesetzt werden kann.

Gemäß einer Ausführungsform ist die Schussvorrichtung als rückstoßfreie Schussvorrichtung ausgebildet und weist ein mit dem Lauf verbundenes und sich entgegen der Schussrichtung erstreckendes, insbesondere im Wesentlichen rohrförmig ausgebildetes, Neutralisierungselement auf. In einer vorteilhaften Weiterbildung erstreckt sich das Neutralisierungselement dabei in einen dem Flügel gegenüberliegend angeordneten weiteren Flügel, wobei das Neutralisierungselement bevorzugt jeweils im Flügelholm oder Flügelholmabschnitt des Flügels oder des weiteren Flügels aufgenommen ist oder den jeweiligen Flügelholm oder Flügelholmabschnitt ausbildet. Durch das Neutralisierungselement wird ein Teil der Treibladungsgase gezielt nach hinten ausgestoßen, wodurch der beim Schuss entstehende Rückstoß erheblich reduziert oder vollständig kompensiert wird. Dies wirkt sich besonders bei unbemannte Luftfahrzeuge, bei denen abrupte Fluglagestörungen durch Rückstoßkräfte vermieden werden müssen, um die präzise Steuerbarkeit zu erhalten vorteilhaft aus. Die Anordnung auch des Neutralisierungselementes innerhalb des Flügelholms oder eines anderen tragenden Flügelelements bzw. die alternative Ausbildung lasttragendes Strukturelement, verbessert die aerodynamischen Eigenschaften des Luftfahrzeuges durch vorteilhafte Bauraumausnutzung. Durch die Eliminierung oder starke Reduzierung des Rückstoßes, kann die Schussvorrichtung vorteilhaft mit einer höheren Feuerrate betrieben werden, ohne den stabilen Flug des Luftfahrzeuges und die Zielstabilität und Trefferwahrscheinlichkeit zu beeinträchtigen. Durch die spiegelbildliche Anordnung des Neutralisierungselementes in einem Flügelholm eines gegenüberliegenden weiteren Flügels des Luftfahrzeuges wird vorteilhaft eine symmetrische Massenverteilung erreicht wobei einseitige Lasten und damit verbundene, unerwünschte Drehmomente minimiert werden. Im Zusammenhang mit der vorliegenden Erfindung kann die rückstoßfreie Schussvorrichtung sowohl mit Kugelgeschossen als auch mit Schrotmunition verwendet werden. Rückstoßfreie ausgestaltete Schussvorrichtungen werden auch als Recoilless-Schussvorrichtung und deren Anwendung als Recoilless-Anwendung bezeichnet. Von der Erfindung gleichermaßen umfasst sind auch rückstoßfreie Schussvorrichtungen, bei denen anstelle der zuvor beschriebenen Ableitung von Treibladungsgasen andere Mechanismen zur Rückstoßeliminierung eingesetzt werden. Hierzu zählen beispielsweise Recoilless-Schussvorrichtung mit Ausstoß von Gegenmassen, ohne die Erfindung auf die vorgenannten Optionen zu beschränken.

Gemäß einer Ausführungsform ist der Flügel als Flügel eines als Nurflügler ausgebildeten Luftfahrzeuges vorgesehen. In diesem Zusammenhang ist unter dem Begriff Nurflügler, synonym auch als Deltaflügler bezeichnet, ein Luftfahrzeug zu verstehen, dessen gesamte aerodynamische Tragstruktur ausschließlich aus der Flügelfläche besteht, insbesondere ohne separates Höhen- oder Seitenleitwerk. Die Steuerung erfolgt durch differenzierte aerodynamische Steuerflächen oder veränderbare Flügelprofile. Diese Bauweise bietet Vorteile hinsichtlich Gewicht, Reichweite und Manövrierfähigkeit, insbesondere für unbemannte Luftfahrzeuge (UAVs). Die Anordnung der Schussvorrichtung entlang der Spannweitenrichtung des Flügels gewährleistet, dass Projektil- oder Schrotgeschosse quer zur Flugrichtung abgegeben werden können. In Kombination mit der Nurflügler-Konstruktion ermöglicht dies ein zielgenaues Feuern im Vorbeiflug, ohne dass das Luftfahrzeug direkt auf Kollisionskurs mit dem Ziel fliegen muss. Die Integration einer seitlich feuernden Schussvorrichtung ermöglicht vorteilhaft auch eine koordinierte Angriffsstrategie mit Drohnenschwärmen, bei der mehrere Luftfahrzeuge synchron Ziele bekämpfen, ohne sich direkt in einen Gefahrenbereich zu begeben. Im Zusammenhang mit der vorliegenden Erfindung können im Flügel auch zwei, spiegelbildlich angeordnete Schussvorrichtungen integriert werden, wodurch eine symmetrische Gewichts- und Lastverteilung erreicht wird, und unerwünschte einseitige Belastungen und aerodynamische Ungleichgewichte vermieden werden. Die Anordnung von zwei Schussvorrichtungen ist insbesondere bei der Integration der Schussvorrichtung von Vorteil, da der Rückstoß durch die gegenüberliegende Schussvorrichtung oder aber ein alternativ zur zweiten Schussvorrichtung vorgesehenes Gegengewichtselement kompensiert werden kann.

In einer bevorzugten Ausführungsform ist vorgesehen, dass der Flügel als einer von mehreren sich radial von einer Längsachse des Luftfahrzeuges weg erstreckender und eine Drehachse aufweisender Ruderflügel ausgebildet ist und der den Lauf aufnehmende Flügelholm oder Flügelholmabschnitt oder der den Flügelholm oder den Flügelholmabschnitt ausbildende Lauf in die Drehachse des Ruderflügels integriert ist. Als Luftfahrzeug mit Ruderflügeln, auch als Flügelsteuerer bezeichnet, ist im Zusammenhang mit der vorliegenden Erfindung ein Luftfahrzeug zu verstehen, das über bevorzugt mehrere Flügel verfügt, die um eine Drehachse schwenkbar sind, um Steuerbewegungen auszuführen. Im Gegensatz zu herkömmlichen Luftfahrzeugen mit separaten Steuerflächen, wie Querrudern oder Höhenrudern, erfolgt die Steuerung durch die Veränderung des Anstellwinkels oder der Position der jeweiligen Ruderflügel, einzelner Ruderflügel oder einzelner Flügelelemente oder -segmente. Diese Konstruktion ermöglicht eine direkte aerodynamische Steuerung, indem die Flügel aktiv gedreht oder verstellt werden. Dies erweist sich besonders für unbemannte Luftfahrzeuge als vorteilhaft, da komplexe mechanische Steuerflächen entfallen können. Im Zusammenhang mit der vorliegenden Erfindung wird durch die Integration des Laufes in die Drehachse des Ruderflügels eine gezielte Steuerung der Schussrichtung ermöglicht. Dies ermöglicht, beispielsweise durch über die Drehflügelstruktur gesteuertes Rollen des Luftfahrzeuges, eine präzise Zielausrichtung ohne zusätzliche bewegliche Waffensysteme oder mechanische Zielsteuerungen. Da der Lauf direkt in die tragende Struktur des Ruderflügels integriert ist, wird zudem kein separates Waffensystem mit eigenem Aufhängungssystem benötigt, wodurch sich vorteilhaft die Komplexität und das Gewicht des Luftfahrzeuges reduziert und zudem eine bessere Nutzlastverteilung erreicht wird, da der Bauraum in der Flügelstruktur für die Anordnung der Waffe genutzt wird. Da der Lauf in die Drehachse des Ruderflügels integriert ist, entstehen vorteilhaft keine ungleichmäßigen Massenverteilungen oder unerwünschte Drehmomente, die die Stabilität des Luftfahrzeugs negativ beeinflussen könnten. Hierdurch wird eine verbesserte Fluglageregelung und eine höhere Manövrierfähigkeit erreicht. Durch die Integration der Schusswaffe in den Flügelholm bleibt zudem die aerodynamische Form des Ruderflügels erhalten.

Im Zusammenhang mit der zuvor beschriebenen Ausführungsform ist gemäß einer Weiterbildung vorgesehen an dem den Lauf aufnehmenden Flügelholm oder Flügelholmabschnitt oder dem den Flügelholm oder den Flügelholmabschnitt ausbildenden Lauf wenigstens ein Drehlager des Ruderflügels anzuordnen, wobei aerodynamische Lasten über das wenigstens eine Drehlager in den den Lauf aufnehmenden Flügelholm oder Flügelholmabschnitt oder den den Flügelholm oder den Flügelholmabschnitt ausbildenden Lauf einleitbar sind. Die Integration des Drehlagers direkt am Flügelholm oder Lauf ermöglicht vorteilhaft eine direkte Lastübertragung, sodass keine zusätzlichen strukturellen Verstärkungen oder Verbindungselemente erforderlich sind. Dies reduziert das Gesamtgewicht des Luftfahrzeugs und trägt zu einer effizienteren Nutzung der verfügbaren Bauräume bei. Durch die Einleitung aerodynamischer Lasten über das Drehlager wird vorteilhaft eine gleichmäßige Verteilung der Kräfte sichergestellt, wodurch lokale Belastungsspitzen vermieden werden. Da die aerodynamischen Lasten gezielt über das Drehlager in den Flügelholm oder Lauf eingeleitet werden, bleibt die ursprüngliche Steuerbarkeit des Ruderflügels wie in Luftfahrzeugen ohne zusätzlich im Flügel integrierter Waffe erhalten. Die direkte Verbindung zwischen Lauf und Drehlager gewährleistet auch, dass beim Schuss entstehende Kräfte über das Lager in die Flugzeugstruktur eingeleitet werden, wodurch unerwünschte Vibrationen oder Ablenkungen vorteilhaft minimiert werden.

Gemäß einer Ausführungsform weist die Schussvorrichtung eine Empfangseinheit zum Empfang eines Auslösesignals für eine Schussabgabe auf, wobei das Auslösesignal insbesondere von einer Steuereinrichtung des Luftfahrzeuges an die Empfangseinheit ausgebbar ist. Durch die Anbindung der Schussvorrichtung an eine Steuereinrichtung kann vorteilhaft eine gezielte, zeitgenaue und automatisierte Schussabgabe erreicht werden. Dies ermöglicht präzisere Schüsse, insbesondere bei schnell beweglichen Zielen oder bei der Bekämpfung mehrerer Ziele in kurzen Zeitabständen. Da das Luftfahrzeug das Auslösesignal direkt an die Empfangseinheit übermitteln kann, entfällt die Notwendigkeit einer manuellen und/oder ferngesteuerten Auslösung oder einer zusätzlichen Mechanik, wodurch vorteilhaft schnellere Reaktionszeiten realisiert werden können. Die Steuereinrichtung kann in einer Weiterbildung optional mit beispielsweise Klgestützten Zielerkennungssystemen oder Sensoren verknüpft werden, sodass die Schussvorrichtung automatisch ausgelöst wird, wenn eine Bedrohung oder das zu bekämpfende Ziel identifiziert wird. Dies erweist sich insbesondere beim Einsatz autonomer Drohnen oder Drohnenschwärme oder unbemannter Kampfsysteme mit vollautomatischer Zielverfolgung und Bekämpfung als vorteilhaft. Durch die Steuerung über ein Auslösesignal kann zudem sichergestellt werden, dass die Schussvorrichtung nur unter definierten Bedingungen aktiviert wird, wodurch unbeabsichtigter Schussabgaben ausgeschlossen werden. Die Möglichkeit, die Schussvorrichtung über ein externes Signal auszulösen, erlaubt zudem verschiedene Schussmodi, beispielsweise Einzelschuss oder Schnellfeuer in Abhängigkeit von der jeweiligen Bedrohungslage oder Bekämpfungssituation, synchronisierte Salven in Drohnenschwärmen bei koordinierten Angriffen oder bis zu Erreichung eines optimalen Zielzeitpunktes verzögerte Schüsse oder Schussfolgen.

In einer Ausführungsform ist das Luftfahrzeug als ein den erfindungsgemäß ausgeführten Flügel aufweisender Nurflügler oder als mehrere drehgelagerte Ruderflügel, die gemäß der Erfindung ausgeführt sind, aufweisendes, insbesondere unbemanntes Luftfahrzeug ausgebildet. Daraus ergeben sich die zuvor bereits im Zusammenhang mit der Beschreibung des erfindungsgemäßen Flügels beschriebenen Vorteile, die im vorliegenden weiteren Aspekt der Erfindung gleichermaßen realisiert werden.

In einer Ausführungsform des Luftfahrzeuges ist eine Steuereinheit zur Ausgabe des Auslösesignals an die Empfangseinheit der Schussvorrichtung vorgesehen.

Durch die Anbindung der Steuereinheit an die Empfangseinheit der Schussvorrichtung kann die Schussabgabe automatisiert, zielgerichtet und mit hoher Präzision erfolgen. Die Steuereinheit, die herkömmlicherweise mit Sensoren, Radarsystemen oder optischen Zielerfassungssystemen verbunden ist, kann Ziele automatisch identifizieren und vorteilhaft das optimale Zeitfenster für die Ausgabe des Auslösesignals an die Empfangseinheit der Schussvorrichtung und damit den Zeitpunkt der Schussabgabe bestimmen.

Gemäß einer Ausführungsform der erfindungsgemäßen Verwendung weist die Schussvorrichtung eine Schusswaffe zur Abgabe von Kugel- oder Schrotgeschoßen auf und/oder ist als rückstoßfreie Schussvorrichtung ausgebildet. Daraus ergeben sich die zuvor bereits im Zusammenhang mit der Beschreibung des erfindungsgemäßen Flügels beschriebenen Vorteile, die im vorliegenden weiteren Aspekt der Erfindung gleichermaßen realisiert werden. Die Verwendung des erfindungsgemäßen Flügels mit einer Schusswaffe zur Abgabe von Kugel- oder Schrotgeschossen und/oder als rückstoßfreie Schussvorrichtung ermöglicht vorteilhaft eine flexible, stabile und hochpräzise Zielbekämpfung unter Vermeidung von Kollisionen zwischen bekämpfendem und bekämpftem Luftfahrzeug. Die in einer vorteilhaften Weiterbildung vorgesehene Minimierung des Rückstoßes verbessert dabei die Fluglage und Treffsicherheit. Die Munitionsoptionen erlauben eine flexible Anpassung der Verwendung des Luftfahrzeuges an verschiedene Einsatzszenarien, insbesondere im Bereich der autonomen Drohnenabwehr und bei Luftkampfoperationen.

### KURZBESCHREIBUNG DER ZEICHNUNGEN

Im Folgenden wird die Erfindung unter Bezugnahme auf die Figuren der Zeichnungen erläutert. Von den Figuren zeigen:
- Fig. 1: eine schematische Darstellung eines Luftfahrzeuges gemäß einem Ausführungsbeispiel der vorliegenden Erfindung;
- Fig. 2: eine schematische Darstellung eines Flügels gemäß einem Ausführungsbeispiel der vorliegenden Erfindung;
- Fig. 3: eine schematische Darstellung eines Flügels gemäß einem Ausführungsbeispiel der vorliegenden Erfindung; und
- Fig. 4: eine schematische Darstellung eines Luftfahrzeuges gemäß einem weiteren Ausführungsbeispiel der vorliegenden Erfindung.

In den Figuren bezeichnen dieselben Bezugszeichen gleiche oder funktionsgleiche Komponenten, soweit nichts Gegenteiliges angegeben ist.

### AUSFÜHRLICHE BESCHREIBUNG VON AUSFÜHRUNGSBEISPIELEN DER ERFINDUNG

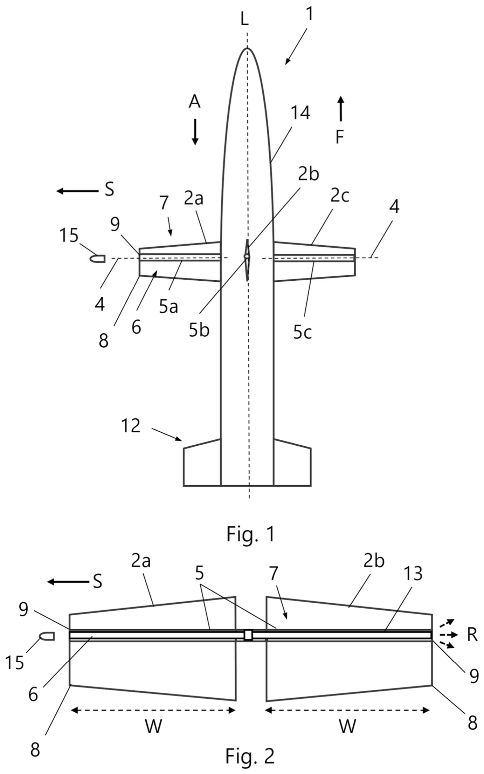

Fig. 1 zeigt eine schematische Darstellung eines Luftfahrzeugs 1 gemäß einem Ausführungsbeispiel der vorliegenden Erfindung. Das Luftfahrzeug 1 ist im Ausführungsbeispiel als als Flügelsteuerer bezeichnetes, unbemanntes Luftfahrzeug 1, oder Drohne, ausgebildet und umfasst einen Rumpf 14, über dessen Umfang verteilt mehrere als Ruderflügel ausgebildete Flügel 2a, 2b, 2c angeordnet sind. Die Flügel 2a, 2b, 2c sind um eine sich jeweils radial vom Rumpf 14 erstreckende Drehachse 4 drehbar am Rumpf 14 gelagert. Die Flügel 2a, 2b, 2c übernehmen sowohl die Tragflächenfunktion als auch die Steuerung des Luftfahrzeugs 1. Durch eine gezielte Verstellung um die Drehachse 4 kann das Luftfahrzeug 1 in Nick- und Rollrichtung gesteuert werden, ohne dass separate Höhen- oder Querruder erforderlich sind. Dies ermöglicht eine direkte aerodynamische Steuerung durch Anpassung des Anstellwinkels der Flügel 2a, 2b, 2c relativ zu der der Flugrichtung F entgegengesetzten Anströmrichtung A. Zudem kann durch eine differenzierte Bewegung der Flügel 2a, 2b, 2c eine gezielte Schussausrichtung der in einem der Flügel 2a, 2b, 2c integrierten Schussvorrichtung 7 erfolgen, ohne dass das gesamte Luftfahrzeug 1 seine Flugbahn ändern muss.

Jeder der Flügel 2a, 2b, 2c umfasst jeweils einen Flügelholm 5a, 5b, 5c, wobei im Ausführungsbeispiel der Lauf 6 der in einem der Flügel 2a integrierten Schussvorrichtung 7 als Flügelholme 5a dient. Eine Ausrichtung des Laufes 6 und damit der Schussrichtung S kann durch entsprechende Drehung des Luftfahrzeuges 1 in Rollrichtung erfolgen. Das Luftfahrzeug 1 ist zur Unterstützung der Flugstabilität zusätzlich mit einem Heckleitwerk 12 ausgerüstet, welches weitere Steuerelemente enthalten kann.

Alternativ kann der Lauf 6 als separates, in den Flügelholm 5a aufgenommenes Element vorgesehen werden. Die Schussrichtung S der Schussvorrichtung 7 ist im Wesentlichen orthogonal zur Längsachse L des Rumpfes 14 ausgerichtet. An der äußeren Flügelspitzen 8 des Flügels 2a ist eine Austrittsöffnung 9 für ein Projektil 15 vorgesehen, in die der Lauf 6 der Schussvorrichtung 7 mündet. Im Ausführungsbeispiel ist in nur einem der dargestellten Flügel 2a, 2b, 2c eine Schussvorrichtung 7 integriert. Selbstverständlich können auch in mehreren Flügeln 2a, 2b, 2c beispielsweise in zwei gegenüberliegend am Rumpf 14 angeordneten Flügeln 2a, 2b jeweils Schussvorrichtungen 7 integriert werden.

Fig. 2 zeigt eine schematische Darstellung von paarweise an einem Rumpf 14 (vgl. Fig. 1) eines Luftfahrzeuges 1 anordenbaren Flügeln 2a, 2b, wobei jeder der Flügel 2a, 2b gemäß der vorliegenden Erfindung ausgebildet ist. Beide Flügel 2a, 2b weisen jeweils einen sich über die Spannweite W jedes Flügels 2a, 2b erstreckenden Flügelholm 5 auf, in dem eine im Flügelpaar integrierte im Ausführungsbeispiel rückstoßfrei ausgebildete Schussvorrichtung 7 aufgenommen ist. Im eingebauten Zustand sind die Flügel 2a, 2b gegenüberliegend beiderseits des Rumpfes 14, beispielsweise einer Drohne, angeordnet. Der Lauf 6 der Schussvorrichtung 7 ist in den in Fig. 2 rechts dargestellten Flügel 2a integriert, während zur Rückstoßkompensation im gegenüberliegenden, in Fig. 2 links dargestellten Flügel 2b ein Neutralisierungselement 13 integriert ist. Dieses erstreckt sich entgegen der Schussrichtung S und ist als rohrförmige Struktur ausgebildet, durch die Rückstoßgase R ausgeleitet werden. Am äußeren Ende, d.h. der Flügelspitze 8 des den Lauf 6 der Schussvorrichtung 7 beinhaltenden Flügels 2a ist die Austrittsöffnung 9 für das Projektil 15 vorgesehen, durch die dieses aus dem Lauf 6 austreten kann, während bei Schussabgabe aus der an der Flügelspitze 8 des gegenüberliegenden Flügels 2b vorgesehenen Austrittsöffnung 9 die Rückstoßgase R ausgeleitet werden. Durch die gezielte Rückstoßneutralisierung über das Neutralisierungselement 13 wird die Flugstabilität des Luftfahrzeugs 1 während der Schussabgabe sichergestellt.

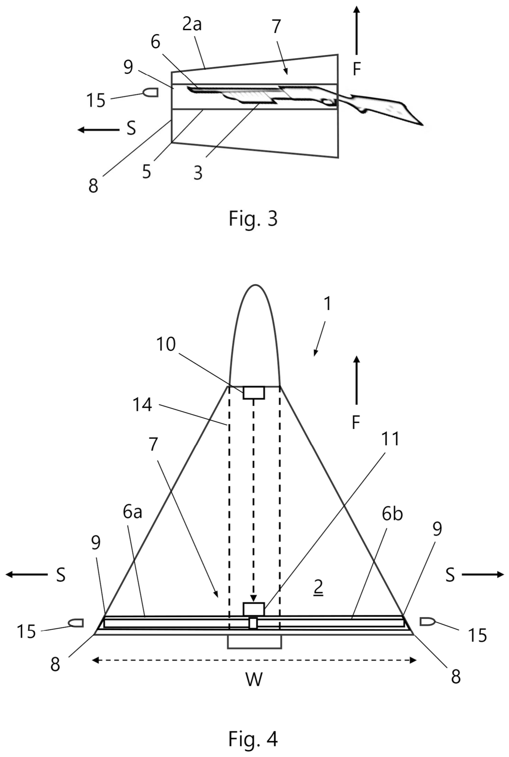

Fig. 3 zeigt eine schematische Darstellung eines Flügels 2a gemäß einem Ausführungsbeispiel der vorliegenden Erfindung, wobei hierbei eine Schussvorrichtung 7 im Flügelholm 5 aufgenommen ist. Der Flügelholm 5 ist orthogonal zu einer Flugrichtung F des Luftfahrzeuges 1 ausgerichtet, wobei die Ausrichtung des Flügelholmes 5 der Schussrichtung S, die ebenfalls im Wesentlichen orthogonal zur Flugrichtung F verläuft, entspricht. Die Schussvorrichtung 7 kann für die Abgabe von Kugel- oder Schrotgeschossen ausgebildet sein und kann im gezeigten Ausführungsbeispiel aus dem fest mit dem Flügel 2a verbauten Flügelholm 5 entnommen und gegen eine andere Schussvorrichtung 7 ausgetauscht werden. In einer Ausgestaltung für Kugelmunition umfasst die Schussvorrichtung 7 einen Lauf 6 mit einem gezogenen oder glatten Rohr, das eine hohe Präzision und Reichweite ermöglicht. Alternativ kann die Schussvorrichtung 7 für Schrotmunition ausgeführt sein, wobei eine Munitionskammer 3 für Patronen mit breiter Streuung vorgesehen ist, die insbesondere für den Einsatz gegen im Nahbereich zu bekämpfende, kleinere bewegliche Ziele oder Drohnenschwärme geeignet ist. Die Flügelspitze 8 des Flügels 2a weist eine Austrittsöffnung 9 auf, durch die das Projektil 15 nach dem Abfeuern der Schussvorrichtung 7 austritt. Die Schussvorrichtung 7 ist derart in den Flügelholm 5 integriert, dass die aerodynamische Funktion des Flügels 2a weitgehend erhalten bleibt. Die Schussvorrichtung 7 kann im gezeigten Ausführungsbeispiel aus dem fest mit dem Flügel 2 verbauten Flügelholm 5 entnommen werden. Am Flügel 2a auftretende aerodynamischen Lasten werden über den Flügelholm 5 abgeleitet.

Fig. 4 zeigt eine schematische Darstellung eines Luftfahrzeugs 1 gemäß einem weiteren Ausführungsbeispiel der vorliegenden Erfindung. Das Luftfahrzeug 1 ist im Ausführungsbeispiel als Nurflügler ausgebildet, wobei die gesamte aerodynamische Tragstruktur durch einen einzigen Flügel 2a gebildet wird, ohne dass ein separates Höhen- oder Seitenleitwerk vorhanden ist. Im Falle eines Nurflüglers sind alle aerodynamischen Steuerflächen direkt im Flügel 2 integriert. Die Steuerung erfolgt durch differenzierte Klappensteuerung oder Schubvektorsteuerung, die eine gezielte Beeinflussung der Fluglage ermöglichen. Der Flügel 2 weist an seinen jeweils in Querrichtung zum Rumpf 14 gegenüberliegenden Flügelspitzen 8 Austrittsöffnungen 9 auf, in die Läufe 6a, 6b von im Flügelholm 5 aufgenommenen Schussvorrichtungen 7 münden. In der gezeigten Ausführungsform sind zwei unabhängige Schussvorrichtungen 7 im Flügel 2 integriert, sodass Projektile 15 aus beide Flügelspitzen 8 austreten können. In einer nicht dargestellten, alternativen Ausführungsform kann die Schussvorrichtung 7 als im Flügel 2 integrierte rückstoßfreie Schussvorrichtung 7 ausgebildet sein. Dabei erstreckt sich die Schussvorrichtung 7 über die gesamte Spannweite W des Flügels 2, wobei das Projektil 15 an einer der Flügelspitzen 8 austritt, während die Rückstoßgase R jeweils an der dieser gegenüberliegenden Flügelspitze 8 ausgeleitet werden. Dies ermöglicht eine effiziente Rückstoßneutralisierung und gewährleistet eine stabile Fluglage während der Schussabgabe. In einer weiteren Ausführungsform kann eine Schussvorrichtung 7 im Flügel 2 integriert werden, wobei dann das Projektil nur an einer Flügelspitze 8 austritt.

Das Luftfahrzeug 1 verfügt über eine Steuereinheit 10, die Auslösesignale an eine in der Schussvorrichtung 7 vorgesehenen oder dieser zugeordneten Empfangseinheit 11 ausgeben kann, um während des Fluges die Schussabgabe zu initiieren.

### BEZUGSZEICHENLISTE

- 1: Luftfahrzeug
- 2, 2a, b, c: Flügel
- 3: Munitionskammer
- 4: Drehachse
- 5: Flügelholm
- 6, 6a, b: Lauf
- 7: Schussvorrichtung
- 8: Flügelspitze
- 9: Austrittsöffnung
- 10: Steuereinheit
- 11: Empfangseinheit
- 12: Heckleitwerk
- 13: Neutralisierungselement
- 14: Rumpf
- 15: Projektil

- A: Anströmrichtung
- F: Flugrichtung
- L: Längsachse
- W: Spannweite
- R: Rückstoßgase
- S: Schussrichtung

## Patentansprüche

1. Flügel (2, 2a, b, c) eines Luftfahrzeuges (1), insbesondere unbemannten Luftfahrzeuges (1), mit einem sich in Richtung einer Flügellängsachse ersteckenden Flügelholm (5) und wenigstens einer in den Flügel (2, 2a, b, c) integrierten und einen Lauf (6) aufweisenden Schussvorrichtung (7), wobei der Lauf (6) in einer Längsrichtung des Flügelholms (5) ausgerichtet ist und eine im Bereich einer Flügelspitze (8) angeordnete Austrittsöffnung (9) aufweist.

2. Flügel (2, 2a, b, c) nach Anspruch 1, wobei der Lauf (6) im Flügelholm (5) oder einem Flügelholmabschnitt aufgenommen ist oder den Flügelholm oder den Flügelholmabschnitt ausbildet.

3. Flügel (2, 2a, b, c) nach Anspruch 1 oder 2, wobei die Schussvorrichtung (7) als Schusswaffe zur Abgabe von Kugel- oder Schrotgeschoßen oder Granaten ausgebildet ist.

4. Flügel (2, 2a, b, c) nach einem der vorhergehenden Ansprüche, wobei die Schussvorrichtung (7) als rückstoßfreie Schussvorrichtung (7) ausgebildet ist und ein mit dem Lauf (6) verbundenes und sich entgegen der Schussrichtung (S) erstreckendes, insbesondere im Wesentlichen rohrförmig ausgebildetes, Neutralisierungselement (13) aufweist.

5. Flügel (2, 2a, b, c) nach Anspruch 4, wobei sich das Neutralisierungselement (13) in einen dem Flügel (2, 2a, b, c) gegenüberliegend angeordneten weiteren Flügel (2, 2a, b, c) erstreckt.

6. Flügel (2, 2a, b, c) nach Anspruch 4 oder 5, wobei das Neutralisierungselement (13) im Flügelholm (5) oder Flügelholmabschnitt des Flügels (2, 2a, b, c) oder des weiteren Flügels (2, 2a, b, c) aufgenommen ist oder den jeweiligen Flügelholm (5) oder Flügelholmabschnitt ausbildet.

7. Flügel (2, 2a, b, c) nach einem der vorhergehenden Ansprüche, wobei das Luftfahrzeug (1) als Nurflügler ausgebildet ist.

8. Flügel (2, 2a, b, c) nach einem der Ansprüche 1 bis 6, wobei der Flügel (2, 2a, b, c) als einer von mehreren sich radial von einer Längsachse (L) des Luftfahrzeuges (1) weg erstreckender und eine Drehachse (4) aufweisender Ruderflügel ausgebildet ist und der den Lauf (6) aufnehmende Flügelholm oder Flügelholmabschnitt oder der den Flügelholm (5) oder den Flügelholmabschnitt ausbildende Lauf (6) in die Drehachse (4) integriert ist.

9. Flügel (2, 2a, b, c) nach Anspruch 8, wobei an dem den Lauf (6) aufnehmenden Flügelholm (5) oder Flügelholmabschnitt oder dem den Flügelholm oder den Flügelholmabschnitt ausbildenden Lauf (6) wenigstens ein Drehlager des Ruderflügels angeordnet ist und aerodynamische Lasten über das wenigstens eine Drehlager in den den Lauf (6) aufnehmenden Flügelholm (5) oder Flügelholmabschnitt oder den den Flügelholm (5) oder den Flügelholmabschnitt ausbildenden Lauf (6) einleitbar sind.

10. Flügel (2, 2a, b, c) nach einem der vorhergehenden Ansprüche, wobei die Schussvorrichtung (7) eine Empfangseinheit (11) zum Empfang eines Auslösesignals für eine Schussabgabe aufweist und wobei das Auslösesignal insbesondere von einer Steuereinrichtung (10) des Luftfahrzeuges (1) an die Empfangseinheit (11) ausgebbar ist.

11. Luftfahrzeug (1), insbesondere unbemanntes Luftfahrzeug (1), mit wenigstens einem Flügel (2, 2a, b, c) nach einem der Ansprüche 1 bis 10, wobei eine Schussrichtung (S) der Schussvorrichtung (7) orthogonal zu einer Längsachse (L) des Luftfahrzeuges (1) ausgerichtet ist.

12. Luftfahrzeug (1) nach Anspruch 11, wobei das Luftfahrzeug (1) als ein den Flügel (2, 2a, b, c) aufweisender Nurflügler oder als mehrere drehgelagerte Ruderflügel aufweisendes Luftfahrzeug (1) ausgebildet ist.

13. Luftfahrzeug (1) nach Anspruch 11 oder 12, wobei eine Steuereinheit (10) zur Ausgabe des Auslösesignals an die Empfangseinheit (11) der Schussvorrichtung (7) vorgesehen ist.

14. Verwendung einer Schussvorrichtung (7) in einem Flügel (2, 2a, b, c) eines Luftfahrzeuges (1), insbesondere in einem Flügel (2, 2a, b, c) nach einem der Ansprüche 1 bis 10.

15. Verwendung nach Anspruch 14, wobei die Schussvorrichtung (7) eine Schusswaffe zur Abgabe von Kugel- oder Schrotgeschoßen oder Granaten aufweist und/oder als rückstoßfreie Schussvorrichtung (7) ausgebildet ist.
